# EUROPEAN PATENT APPLICATION

(11) **EP 3 623 168 A1**
(43) Date of publication of application: **18.03.2020**
(21) Application number: 18797751.7
(22) Date of filing: 11.05.2018
(51) Int. Cl.: B44C 5/04, B44C 3/02, B44C 1/26, B32B 3/30, B32B 27/06, B32B 27/18

(54) **AUTOMOBILE DECORATION PANEL AND METHOD FOR MANUFACTURING SAME**

(30) Priority: 12.05.2017 KR 20170059444; 03.04.2018 KR 20180038783; 03.04.2018 KR 20180038784; 03.04.2018 KR 20180038785
(71) Applicant: Yujin SMRC Automotive Techno Corporation, Yesan-gun Chungcheongnam-do 32417 (KR)
(72) Inventor: KWON, Seong Yong, Asan-si Chungcheongnam-do 31533 (KR); JEONG, Dong Youl, Changwon-si Gyeongsangnam-do 51642 (KR); KWON, Bong Cheol, Busan 47895 (KR); PARK, Sung Jun, Busan 16726 (KR); JEONG, Myeong Keun, Busan 49425 (KR); KANG, Shin Sung, Busan 46726 (KR)
(74) Representative: dompatent von Kreisler Selting Werner - Partnerschaft von Patent- und Rechtsanwälten mbB
(86) International application number: PCT/KR2018/005449
(87) International publication number: WO 2018/208126

(57) **Abstract**

The present invention relates to a decoration panel and a method for manufacturing the same and, more particularly, to an automobile decoration panel which gives three-dimensional sense and textural sense to a panel and thus improves the quality of a product, and while being applicable to various parts, and a method for manufacturing the same.

## Description

### [Technical Field]

The present invention relates to an automobile decoration panel and a method for manufacturing the same and, more particularly, to an automobile decoration panel, which provides a three-dimensional effect and textures to enhance the quality of products and to be applied to various parts, and a method for manufacturing the same.

### [Background Art]

In general, resin molded products have been widely used not only for panels around console boxes or gauges as interior and exterior materials for vehicles but also for cases and covers of household electric appliances, such as electric rice cookers.

Especially, various control units and convenience units are installed on a dash board, an audio deck, a gear transmission unit, an air bag, a door lock, a window opening and closing units, and so on, which are mounted around a driver seat and a passenger seat inside the vehicle.

In this instance, interior finishing panels are mounted in gaps between outer surfaces of various control devices and convenience devices and interior materials to finish the interior materials, and such finish panels are important factors to determine the appearance of the interior of the vehicle.

As described above, a demand on aesthetic appearance is gradually increasing with individualization of vehicles since the finish panels for vehicles have a great influence on interior finish of vehicles.

Therefore, recently, demands of interior materials made with real product materials, such as real wood, to obtain refined appearance and luxurious texture are rising.

In the meantime, a conventional laminating method for manufacturing a finish panel using real wood as an interior material includes the steps of laying a substrate, which will be covered with wood, as a basic floor, covering the substrate with patterned wood, and coating and grinding the surface of the patterned wood.

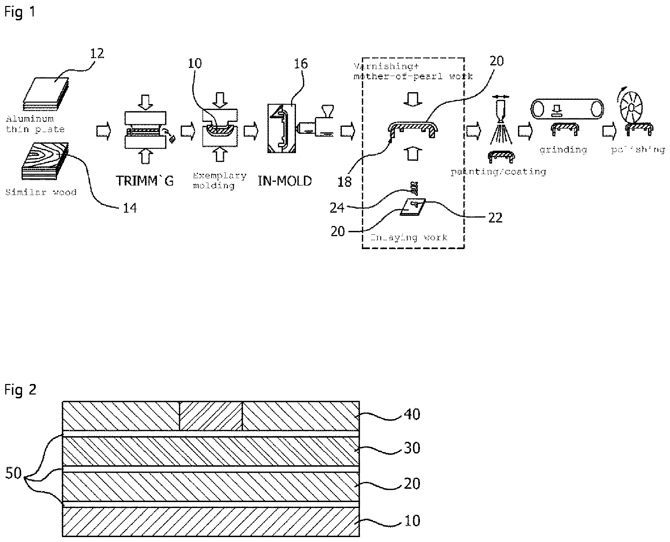

As a method related with such technology, Korean Patent No. 569434 discloses a method for manufacturing an interior material for a vehicle using mother-of-pearl. As shown in FIG. 1, the method for manufacturing an interior material for a vehicle using mother-of-pearl includes the steps of: putting a trimmed aluminum thin plate 12 and a wood-like material 14 in a mold, compressing them to mold and removing from the mold to complete a preformed part 10; inserting the preformed part 10 into an injection mold 16 and injection-molding resin integrally in order to integrally form a mounting terminal, a bracket, a flange or the like to be mounted in a vehicle. After that, a real wood 20 is attached to the outer surface of the injection-molded interior material product 18, namely, the surface of the aluminum thin plate 12, and then, mother-of-pearl is coated on the real wood through the inlaying technique.

Furthermore, the method for manufacturing an interior material for a vehicle using mother-of-pearl includes the steps of: attaching the real wood 20 engraved as a predetermined decoration layer to the surface of the aluminum thin plate 12 of the injection-molded interior material; inserting and attaching a mother-of-pearl 24 into the engraved groove 22; grinding the surface of the mother-of-pearl 24 to make the surface of the mother-of-pearl 24 even; and coating the surface of the real wood 20 having the mother-of-pearl 24 with a coating agent, and grinding

However, the method for manufacturing an interior material has several disadvantages in that it has poor durability since the real wood 20 is just attached to the surface of the aluminum thin plate 12, and in that the manufacturing steps are complicated since the grinding step is performed after the engraved groove 22 is formed in the real wood 20 and the mother-of-pearl 24 is inserted into the engraved groove 22.

In the meantime, a cup holder for a vehicle is mounted to slide into or out of a center fascia panel on which a stereo system or an air conditioner control board is mounted or is mounted on a floor console tray between a gear transmission lever and a console box to be exposed.

Additionally, a cover is mounted on an upper portion of the cup holder in order to provide a beautiful outward appearance. A resin molded article has been widely used for the cover, and aesthetic demand is gradually rising since the cover has a great influence on an esthetic sense of products. Recently, a demand for interior materials made with real wood to obtain refined appearance and luxurious texture is rising.

In relation with such technology, Korean Patent Publication No. 2016-121869 discloses a method for manufacturing real wood. As shown in FIG. 2, the method for manufacturing real wood includes the steps of: laying an adhesive layer 50, which is a paper adhesive, on the upper surface of a technical veneer layer 10; laminating a reinforcing layer 20 on the adhesive layer; applying an adhesive layer 50 on the upper surface of the reinforcing layer 20, laminating a nonwoven fabric 30 on the adhesive layer; applying an adhesive layer 50 on the upper surface of the nonwoven fabric 30; and laminating a decoration veneer layer 40 on the adhesive layer.

Moreover, the reinforcing layer 20 laminated on the upper surface of the technical veneer layer 10 is made of synthetic resin or aluminum, and preferably, made of aluminum, so as to stably secure durability of the entire real wood and realize a predetermined pattern formed by the decoration veneer layer.

However, the method for manufacturing real wood has several disadvantages in that the manufacturing process is complicated and durability is deteriorated since the technical veneer layer 10, the reinforcing layer 20, the nonwoven fabric 30, and the decoration veneer layer 30 are laminated and bonded, and in that it is difficult to mold and weight is increased since the reinforcing layer is made of aluminum.

### [Disclosure]

### [Technical Problem]

Accordingly, the present invention has been made in view of the above-mentioned problems occurring in the prior art, and it is an object of the present invention to provide an automobile decoration panel and a method for manufacturing the same, which can provide texture of real wood through a simple structure, provide unique and luxurious esthetic sense of an actual wood pattern image similar to the real hardwood panel since the inside of an engrave part is semi-transmitted in order to enhance quality of products, and provide a beautiful outward appearance of products since providing a three-dimensional effect having various height differences to be similar with the grain pattern of the real hardwood panel due to the depth of the engrave part.

It is another object of the present invention to provide an automobile decoration panel and a method for manufacturing the same, which can manufacture panels using inlaying technique, provide refined panels with luxurious texture, and realize various shapes.

It is a further object of the present invention to provide an automobile decoration panel and a method for manufacturing the same, which can express refined appearance and luxurious texture of a cup holder cover, and make manufacturing of the cup holder cover easy.

### [Technical Solution]

To accomplish the above object, according to the present invention, there is provided a method for a decoration panel including the steps of: preparing a base layer made of a resin material and having at least one color; preparing a decoration layer formed by printing of paint having at least one predetermined color so that the color of the base layer is transmitted or semi-transmitted through the upper surface of the base layer; and forming a decoration reinforcing layer on the upper surface of the decoration layer, wherein the decoration layer is one among a real wood pattern, a carbon pattern, a chrome pattern, a standardized pattern, and a stone pattern manufactured by one among pad printing, water pressure transfer, screen printing, in mold decoration (IMD), colored spray painting, thermal transfer, roll printing, and laser molding, and wherein the decoration layer has an engraved part and an embossed part formed integrally, and the engraved part has predetermined length and depth and the embossed part has predetermined length and height according to a predetermined grain pattern arrangement to provide texture, light and shade, and volume.

Moreover, the decoration reinforcing layer is coated with stain paint containing 10 to 30% by weight of yellow paint, 5 to 10% by weight of red paint, 5 to 25% by weight of black paint, and 55 to 60% by weight of transparent paint having urethane resin.

Furthermore, the base layer has an engraved part or an embossed part formed integrally in order to correspond to the predetermined grain pattern arrangement.

Additionally, the base layer includes: a resin sheet layer in which a base raw material made with one selected from groups containing acryl-based resin, urethane-based resin, epoxy resin and mixture in which acryl-based resin, urethane-based resin and epoxy resin are mixed, a heat absorbing agent, and additives having a pigment corresponding to the predetermined color are mixed; and an ultraviolet absorbing layer disposed on one among the upper surface and the lower surface of the resin sheet layer.

In addition, the method for manufacturing a decoration panel further includes a flattening layer to flatten an upper portion of the decoration reinforcing layer.

Moreover, the decoration reinforcing layer is forcedly dried at the same time with coating of the stain paint.

Furthermore, the base layer on which any one among the decoration layer, the decoration reinforcing layer and the flattening layer is stacked is applied to a cup holder cover. The base layer is manufactured in such a way as to be bendable since upper surfaces of unit blocks connected with each other get in contact with each other to form a plate shape with a predetermined area.

Continuously, an inlaying mounting part is formed at a portion of the decoration layer or the base layer to be dented and an inlaid decoration is put on the inlaying mounting part.

Additionally, the inlaid decoration stacked on an upper portion of the engraved part has a shape corresponding to the shape of the engraved part and a basic decoration layer is previously stacked and bonded on the upper surface of a sheet.

In another aspect of the present invention, the present invention provides a method for manufacturing a decoration panel including the steps of: preparing a base layer which is colored or translucent and is made of a resin material; stacking and forming a decoration layer on one side of the base layer and having paint with at least one predetermined color so that the color of the base layer is transmitted or semi-transmitted; and stacking a decoration reinforcing layer on the upper surface of the decoration layer, wherein the decoration layer is one among a real wood pattern, a carbon pattern, a chrome pattern, a standardized pattern, and a stone pattern manufactured by one among pad printing, water pressure transfer, screen printing, in mold decoration (IMD), colored spray painting, thermal transfer, roll printing, and laser molding, wherein the decoration layer has an engraved part and an embossed part formed integrally, and the engraved part has predetermined length and depth and the embossed part has predetermined length and height according to a predetermined grain pattern arrangement to provide texture, light and shade, and volume, and wherein the decoration layer is stacked to be located beneath the base layer so that the engraved part and the embossed part get in contact with one side of the base layer.

In a further aspect of the present invention, the present invention provides a method for manufacturing a decoration panel including the steps of: preparing a base layer made of a resin material and having at least one color; preparing a decoration layer formed by printing of paint having at least one predetermined color so that the color of the base layer is transmitted or semi-transmitted through the upper surface of the base layer; and forming a decoration reinforcing layer on the upper surface of the decoration layer, wherein the decoration layer is one among a real wood pattern, a carbon pattern, a chrome pattern, a standardized pattern, and a stone pattern manufactured by one among pad printing, water pressure transfer, screen printing, in mold decoration (IMD), colored spray painting, thermal transfer, roll printing, and laser molding, wherein the decoration layer has an engraved part and an embossed part formed integrally, and the engraved part has predetermined length and depth and the embossed part has predetermined length and height according to a predetermined grain pattern arrangement to provide texture, light and shade, and volume, and wherein the decoration layer is previously manufactured on a sheet and is stacked and bonded on the upper surface of the base layer by an adhesive.

In a still further aspect of the present invention, the present invention provides a decoration panel including: a base layer made of a resin material and having at least one color; a decoration layer stacked on the upper surface of the base layer and having at least one predetermined color so that the color of the base layer is transmitted or semi-transmitted through the upper surface of the base layer; and a decoration reinforcing layer stacked on the upper surface of the decoration layer, wherein the base layer, the decoration layer and the decoration reinforcing layer has an integrated lamination structure.

Moreover, the decoration panel further includes a flattening layer formed to flatten the upper surface of the decoration reinforcing layer, wherein the base layer includes: a resin sheet layer in which a base raw material made with one selected from groups containing acryl-based resin, urethane-based resin, epoxy resin and mixture in which acryl-based resin, urethane-based resin and epoxy resin are mixed, a heat absorbing agent, and additives having a pigment corresponding to the predetermined color are mixed; and an ultraviolet absorbing layer disposed on one among the upper surface and the lower surface of the resin sheet layer.

Furthermore, the decoration panel is applied to a cup holder cover, and the cup holder cover is mounted in such a way as to be bendable since upper surfaces of unit blocks connected with each other get in contact with each other to form a plate shape with a predetermined area.

Additionally, the cup holder cover is selected from structures further including a decoration reinforcing layer and a flattening layer for flattening.

In addition, the cup holder cover is selected from a structure that the unit blocks made of a hard material are bonded to the upper side of a sheet made of a soft material by double injection or by an adhesive layer of the sheet.

Moreover, the cup holder cover is selected from a structure that the unit blocks are connected with each other by a connection means and a structure that a plurality of unit blocks are molded integrally by a mold in which flow holes are interposed between connection parts.

Furthermore, the decoration panel or the cup holder cover further includes an inlaying mounting part disposed on one side of the decoration layer or the base layer having unit blocks, and an inlaid decoration formed on the inlaying mounting part, and the decoration reinforcing layer is stacked on the inlaid decoration.

Additionally, the decoration panel further includes a flattening layer stacked on the upper side of the decoration reinforcing layer.

### [Advantageous Effects]

As described above, the automobile decoration panel and a method for manufacturing the same according to the present invention can provide texture of real wood since expressing a clear color of the real wood, provide unique and luxurious esthetic sense of an actual wood pattern image similar to the real hardwood panel since the inside of an engrave part is semi-transmitted in order to enhance quality of products.

Additionally, the automobile decoration panel and a method for manufacturing the same according to the present invention can provide a beautiful outward appearance of products since providing a three-dimensional effect having various height differences to be similar with the grain pattern of the real hardwood panel due to the depth of the engrave part.

In addition, the automobile decoration panel and a method for manufacturing the same according to the present invention can manufacture panels using inlaying technique, and express refined appearance and luxurious texture of a cup holder cover when being applied to a cup holder.

### [Description of Drawings]

FIG. 1 is a flow chart showing a conventional method for manufacturing an interior material for a vehicle.
FIG. 2 is a sectional view of a panel by a conventional method for manufacturing real wood.
FIG. 3 is a flow chart showing a method for manufacturing an automobile decoration panel according to the present invention.
FIG. 4 is a plan view showing a state where an engraved part is formed on a base layer in the method for manufacturing an automobile decoration panel according to the present invention.
FIG. 5 is a sectional view showing the state where the engraved part is formed on the base layer in the method for manufacturing an automobile decoration panel according to the present invention.
FIG. 6 is a plan view showing a state where a wood pattern layer is printed on the upper surface of the base layer in the method for manufacturing an automobile decoration panel according to the present invention.
FIGS. 7 to 10 are sectional views showing a state where a wood pattern layer, a decoration reinforcing layer, and a flattening layer are formed on the upper surface of the base layer in the method for manufacturing an automobile decoration panel according to an embodiment of the present invention.
FIGS. 11 to 14 are sectional views showing a state where a wood pattern layer, a decoration reinforcing layer, and a flattening layer are formed on the upper surface of the base layer in the method for manufacturing an automobile decoration panel according to another embodiment of the present invention.
FIG. 15 is a flow chart showing a manufacturing state of a real wood pattern according to the present invention.
FIG. 16 is a view showing an application state of a decoration panel according to a further embodiment of the present invention.
FIGS. 17 to 21 are sectional views showing a cup holder cover to which the decoration panel according to another embodiment of the present invention is applied.
FIG. 22 is a view showing an applied state of the decoration panel to which inlaying technique is applied according to a further embodiment of the present invention.

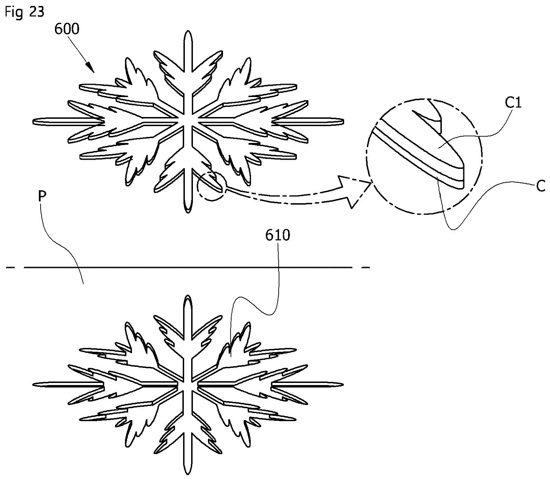

FIG. 23 is a view showing a manufacturing state of the decoration panel to which inlaying technique is applied according to a still further embodiment of the present invention.

### [Mode for Invention]

Hereinafter, a method for manufacturing a decoration panel according to exemplary embodiments of the present invention will be described with reference to the accompanying drawings.

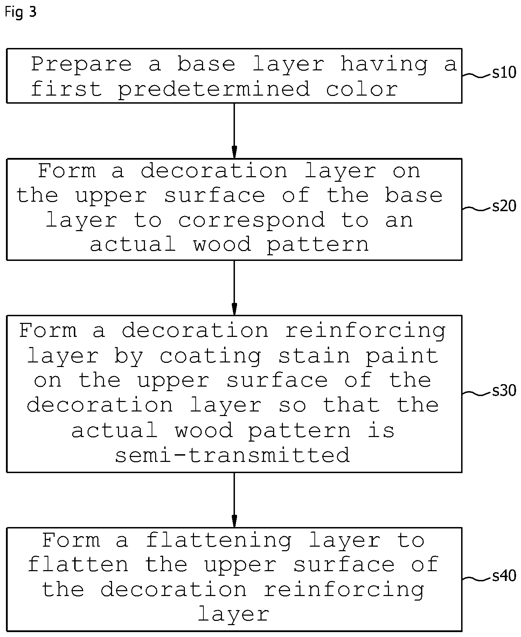

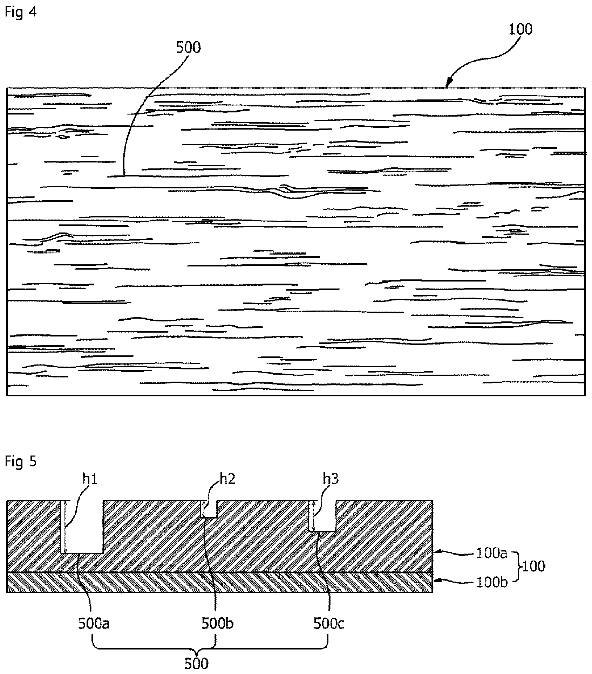

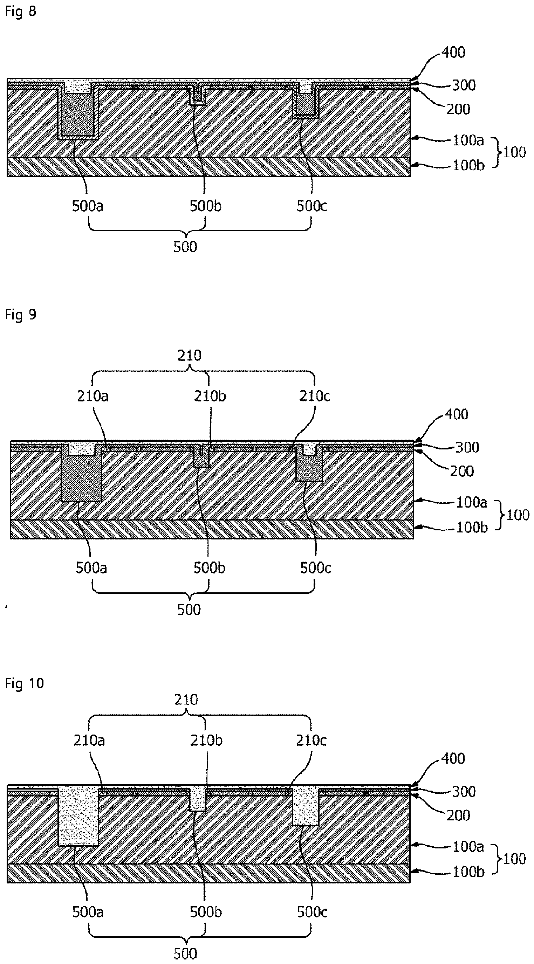

As shown in FIGS. 3 to 10, a real wood panel to which the method for manufacturing a decoration panel according to an embodiment of the present invention includes a base layer 100, a decoration layer 200, a decoration reinforcing layer 300, and a flattening layer 400.

Here, the base layer 100 has a predetermined first color and is made of a resin material.

In this instance, the base layer 100 includes a resin sheet layer 100a made of the resin material, and an ultraviolet absorbing layer 100b disposed at any one among the upper surface and the lower surface of the resin sheet layer 100a.

Furthermore, the resin sheet layer 100a may be formed in such a way that a base raw material in which additives are added is applied to the surface of a product, which is a basic material, to express real wood by a spray gun.

Moreover, the resin sheet layer 100a may be formed by injection-molding, and the injection-molded resin sheet layer 100a may be adhered on the surface of the basic material using an adhesive.

Additionally, the decoration layer 200 is printed with lots of translucent ink through which a predetermined color is semi-transmitted to correspond to an actual wood image pattern 210 with one or more colors on the upper surface of the base layer 100.

In addition, the decoration reinforcing layer 300 has a predetermined color to provide the upper surface of the decoration layer 200 with a real wood texture, and is coated with stain paint through which the actual wood image pattern 210 is semi-transmitted.

Moreover, the flattening layer 400 flattens the upper surface of the decoration reinforcing layer 300.

In this instance, preferably, an engraved part 500 having a predetermined length is formed along a predetermined grain pattern arrangement to provide the actual wood image pattern 210 having a plurality of wood lines 210a, 210b and 210c with a three-dimensional effect.

In detail, the engraved part 500 is formed on the outer surface of the base layer 100, and has a plurality of engraved grooves 500a, 500b and 500c corresponding to the wood lines 210a, 210b and 210c.

Furthermore, preferably, the engraved part 500 may be formed on one side of the outer surface of the base layer 100, on which the decoration layer 200 is stacked, or may be formed on the upper surface of the base layer 100.

Here, the engrave part 500 is formed in such a way that the outer surface of the resin sheet layer 100a is etched to have a predetermined length along the grain pattern arrangement when laser is irradiated to the outer surface of the resin sheet layer 100a through laser marking.

Additionally, if the resin sheet layer 100a is injection-molded, the inner face of a mold for injection-molding is disposed on the engraved part 500 to protrude into a reverse shape, so that the resin sheet layer 100a can be injection-molded to have the engraved part 500.

In this instance, if the engraved part 500 can be formed on the base layer 100, besides the laser marking and the injection molding, various manufacturing methods may be applied, and such modifications belong to the present invention.

That is, the decoration layer forms the engraved part 500 on the upper portion of the base layer to correspond to the real wood through any one among pad printing, water pressure transfer, screen printing, in mold decoration (IMD), colored spray painting, thermal transfer, roll printing, and laser molding.

In the meantime, as shown in FIGS. 3 to 10, a method for manufacturing a decoration panel according to the present invention proceeds as follows.

First, the base layer 100 having the predetermined color and made of a resin material is prepared (S10).

In detail, the base layer 100 includes the resin sheet layer 100a and the ultraviolet absorbing layer 100b.

In this instance, the resin sheet layer 100a is made by mixture in which a base raw material and additives.

Here, it is preferable that preparation of the base layer 100 be understood as the concept to cover that the base layer 100 is formed on the surface of the basic material or that one side of a product manufactured with the base raw material is disposed on the base layer 100.

Moreover, the base raw material contains one selected from groups containing acryl-based resin, urethane-based resin, and mixture in which acryl-based resin and urethane-based resin are mixed.

In this instance, the acryl-based resin is transparent, is high in light penetration rate, has excellent physical properties in hardness, gloss, low temperature vulcanization, adhesiveness, wear resistance, shock resistance, and resistance to laundering, and the urethane-based resin is excellent in elasticity, wear resistance, and machinability.

Furthermore, the additives have a heat absorbing agent and pigment corresponding to the predetermined color.

In this instance, the pigment may be colored pigment for synthetic resin, the resin sheet layer 100a can have the color corresponding to the predetermined color since the pigment is mixed with the base raw material.

Here, the predetermined color may be varied according to the color of the real wood manufactured.

Additionally, the heat absorbing agent may be a benzotriazole heat absorbing agent, a salicylate heat absorbing agent, a cyanoacrylate heat absorbing agent, and triazine heat absorbing agent.

In this instance, the heat absorbing agent can prevent discoloration, swelling, and loss of gloss of the resin sheet layer 100a since having excellent ultraviolet absorbing ability.

Here, the resin sheet layer 100a is formed in such a way that the base raw material to which the additives are added is applied to the surface of the basic material by a spray gun.

Of course, according to circumstances, the resin sheet layer 100a may be injection-molded, or the injection-molded resin sheet layer 100a may be adhered on the surface of the basic material by an adhesive 800.

In the meantime, preferably, the ultraviolet absorbing layer 100b is disposed on one among the upper surface and the lower surface of the resin sheet layer 100a.

In detail, the ultraviolet absorbing layer 100b is formed in such a way that the heat absorbing agent is generally coated on one of the upper surface and the lower surface of the resin sheet layer 100a. In a step of performing laser marking which will be described later, the resin sheet layer 100a is enhanced in laser machinability since a laser light absorption amount of a par to which laser is irradiated from the ultraviolet absorbing layer 100b increases.

In this instance, in this embodiment, it is described that the ultraviolet absorbing layer 100b is disposed on the lower surface of the resin sheet layer 100a, but the ultraviolet absorbing layer 100b may be disposed on the upper surface of the resin sheet layer 100a.

In the meantime, when the base layer 100 is prepared (S10), preferably, the laser marking is performed to form the engraved part 500 on the outer surface of the previously formed layer.

Here, it is preferable that the previously formed layer be understood as at least one among the base layer 100, the decoration layer 200, the decoration reinforcing layer 300 and the flattening layer 400, which is formed before the step of performing the laser marking, formed by steps. In this embodiment, it is preferable that the previously formed layer be understood actually as the base layer 100.

In detail, the laser marking is performed to form the engraved part 500 on the upper surface of the base layer 100.

In this instance, preferably, the engraved part 500 has a predetermined length along the preset grain pattern arrangement.

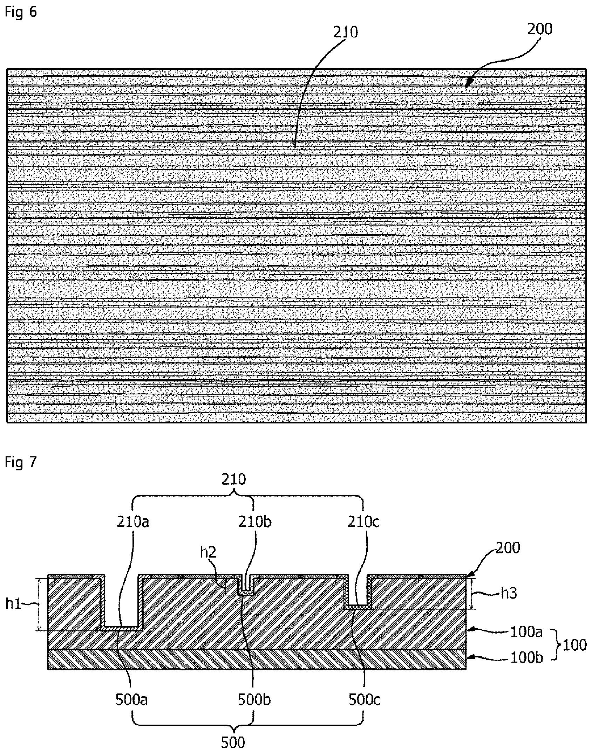

Here, in FIG. 6, the preset grain pattern arrangement may be set to correspond to the actual wood image pattern 210 formed on the decoration layer 200.

In detail, the actual wood image pattern 210 includes a plurality of wood lines 210a, 210b and 210c with different widths, shadings and depths.

Moreover, a grain direction that the plurality of wood lines 210a, 210b and 210c are arranged is set in a longitudinal direction or in a width direction of the base layer 100 to correspond to the grain direction of a real hardwood panel, and the preset grain pattern arrangement is set to correspond to the arrangement of the wood lines 210a, 210b and 210c.

Additionally, in case of the laser marking, there is a frequency section reacting depending on a frequency range of laser by materials of an object to which laser is irradiated. The frequency range for the laser marking is 40 kHz to 100 kHz.

Moreover, laser output of the laser marking is 25 to 100 % by output on the basis of 20 to 100W, and the marking speed of the laser marking is within a range of 500 to 1000 mm/sec.

Here, because laser irradiation time that laser gets in contact with the surface increases when the laser marking speed is reduced, the engraved part 500 becomes deeper.

Of course, according to circumstances, the resin sheet layer 100a may be injection-molded in a state where the engraved part 500 is formed since the inner face of the mold protrudes so that the engraved part 500 has a reverse shape.

Meanwhile, when the laser marking is performed on the upper surface of the base layer 100 to form the engraved part 500, lots of translucent ink through which the predetermined color is semi-transmitted to correspond to an actual wood image pattern 210 with one or more colors on the upper surface of the base layer 100 to form the decoration layer 200 (S20).

In detail, the decoration layer 200 is formed in such a way that the ink is printed on the upper surface of the base layer 100 to correspond to the actual wood image pattern 210.

Here, the actual wood image pattern 210 has at least one color.

For instance, the wood lines 210a, 210b and 210c are disposed to have one or more colors with a yellow ink, a red ink, a black ink, and mixture of the yellow ink, the red ink and the black ink so that they have different colors.

In this instance, the wood lines 210a, 210b and 210c gets lower in light and shade when a mixing ratio of the black ink increases.

For instance, if the wood line 210a has a color with more black ink than another wood line 210b with respect to the entire weight, the light and shade of the wood line 210a is lower than that of the wood line 210b.

Here, preferably, the ink for the decoration layer 200 has transparent ink of 45 to 55 % by weight with respect to the entire weight.

In detail, each of the wood lines are printed with colored ink containing a yellow ink, a red ink, a black ink, and mixture of the yellow ink, the red ink and the black ink to have at least one color, and the transparent ink of 45 to 55 % by weight with respect to the entire weight is mixed so that the base layer 100 is semi-transmitted.

That is, the decoration layer 200 is printed with the transparent ink and the mixture of the colored ink, so that the predetermined color of the base layer 100 is semi-transmitted.

Here, it is preferable that semi-transmission of the predetermined color of the base layer 100 be understood as that the base layer 100 is projected partially and the predetermined color is checked visually when the decoration layer 200 is viewed from the top.

When the decoration layer 200 is viewed from the top, since the semi-transmitted predetermined color and the color of the ink of the decoration layer 200 are seen to be overlapped, a clear real wood color is provided.

Meanwhile, the engraved part 500 includes a plurality of engraved grooves 500a, 500b and 500c corresponding to the wood lines.

Here, the width of the engraved grooves is less than the width of the wood lines.

In detail, at the time of the laser marking, the engraved grooves are formed to be narrower than the wood lines.

The wood lines may be formed at portions adjoining the inner faces and edges of the engraved grooves when the decoration layer 200 is formed.

In this instance, the actual wood image pattern 210 is provided with a three-dimensional effect since there is a height difference between the portions adjoining the edges of the engraved grooves and the portions adjoining the inner faces of the engraved grooves by the engraved depth of the engraved grooves formed along the predetermined grain pattern arrangement.

That is, when the decoration layer 200 is viewed from the top, the portion adjoining the edges of the engraved grooves 500a, 500b and 500c are edges of the wood lines 210a, 210b and 210c, so the actual wood image pattern 210 can be checked visually.

Moreover, because the portions formed on the inner faces of the engraved grooves form a sense of space downwardly from the portions that the inner faces of the wood lines adjoin the edges of the engraved grooves, the three-dimensional effect is provided.

Furthermore, inner portions of the engraved grooves show the predetermined color of the base layer 100, the colors of the wood lines corresponding to the engraved grooves, and the mixed color through which the predetermined color of the decoration layer is semi-transmitted.

In this instance, preferably, the engraved part 500 is selectively set in an engraved depth to correspond to the light and shade of the wood lines.

In detail, the wood lines may have various colors, such as yellow color, red color, black color and mixed color thereof, and light and shade gets lower when a mixture ratio of the black color gets higher.

Here, the engraved depth of the engraved part 500 is set to correspond to the light and shade difference of the wood lines according to the mixed rate of the black color.

In detail, the engraved part 500 may include a first engraved groove 500a, a second engraved groove 500b and a third engraved groove 500c which have different engraved depths.

In this instance, the first engraved groove 500a is located to correspond to the first wood line 210a, the second engraved groove 500b is located to correspond to the second wood line 210b, and the third engraved groove 500c is located to correspond to the third wood line 210c.

Here, if the first wood line 210a is low in light and shade since being higher in the mixed rate of the black ink than the second wood line 210b, an engraved depth h1 of the first engraved groove 500a is deeper than an engraved depth h2 of the second engraved groove 500b.

Additionally, as described above, if the third wood line 210c is low in light and shade than the second wood line 210b, an engraved depth h3 of the third engraved groove 500c is deeper than the engraved depth h2 of the second engraved groove 500b.

Here, the engraved grooves are formed to have the predetermined length according to the predetermined grain pattern arrangement at the time of the laser marking, and the laser marking speed is adjusted to set the engraved depth.

Therefore, the decoration layer 200 is provided with the three-dimensional effect to have various height differences according to the engraved depths of the engraved grooves formed to correspond to the light and shade of the wood lines, so that the actual wood image pattern 210 is similar with the grain patterns of the real hardwood panel. Therefore, the decoration layer 200 can provide a beautiful outward appearance of a product.

In this instance, in this embodiment, three wood lines and three engraved grooves are described and illustrated, but, the actual wood image pattern 210 may include wood lines of various forms with different widths, lengths and depths.

In the meantime, the actual wood image pattern 210 may be formed on the decoration layer 200 through one selected from pad printing and water transfer.

In detail, if the decoration layer 200 is formed through pad printing, a method for printing the decoration layer 200 includes the steps of: engraving an ink grooves in a print single board in a state where the actual wood image pattern 210 is reversed; charging the ink grooves with ink of the predetermined color; transferring the charged ink to a pad for printing; and transferring the ink to the upper surface of the base layer 100.

Moreover, if the decoration layer 200 is formed through water transfer, a method for printing the decoration layer 200 includes the steps of: preparing a pattern ink film formed by the actual wood image pattern 210; dissolving the pattern ink film on the water surface; putting and liquefying the pattern ink film in a water tank filled with water; and sinking the base layer 100 in the water tank so that the pattern ink film is transferred to the upper surface.

Of course, according to circumstances, if the decoration layer 200 can be formed on the upper portion of the base layer 100, the decoration layer can be printed in various methods.

In the meantime, when the decoration layer 200 is formed on the upper surface of the base layer 100 (S20), the upper surface of the decoration layer 200 has the predetermined color to provide the upper surface with real wood texture, and is coated with stain paint through which the actual wood image pattern 210 is semi-transmitted so as to form the decoration reinforcing layer 300 (S30).

In detail, the decoration reinforcing layer 300 is formed when the stain paint is coated on the upper surface of the decoration layer 200.

In this instance, preferably, the stain paint contains 10 to 30% by weight of yellow paint, 5 to 10% by weight of red paint, 5 to 25% by weight of black paint, and 55 to 60% by weight of transparent paint having urethane resin.

Here, the yellow paint, the red paint, and the black paint are nano liquid paints.

In this instance, the nano liquid paint is ink that disperses nano-size particles, and can keep high-gloss and high-transparency while keeping light stability and thermal resistance.

For instance, the predetermined color may be an oakwood color in which 30% by weight of yellow paint, 10% by weight of red paint, 5% by weight of black paint, 55% by weight of transparent paint are mixed.

Furthermore, the predetermined color may be a cherry color in which 30% by weight of yellow paint, 5% by weight of red paint, 5% by weight of black paint, 60% by weight of transparent paint are mixed. Alternatively, the predetermined color may be a walnut color in which 10% by weight of yellow paint, 5% by weight of red paint, 25% by weight of black paint, 60% by weight of transparent paint are mixed.

Additionally, the decoration reinforcing layer 300 may be formed when the stain paint is sprayed by a spray gun or coated onto the upper surface of the decoration layer 200 by a roller.

In this instance, the actual wood image pattern 210 may be semi-transmitted through the decoration reinforcing layer 300 to which the transparent paint is mixed to serve as a coloring agent.

Here, it is understood that semi-transmission of the actual wood image pattern 210 means that the decoration layer 200 is projected partially and the actual wood image pattern 210 can be checked visually when the decoration reinforcing layer 300 is viewed from the top.

Therefore, when the base layer 100, the decoration layer 200 and the decoration reinforcing layer 300 are stacked on another, the colors of the layers are overlapped so that the color corresponding to the color of the real wood can be expressed clearly.

Therefore, when the decoration reinforcing layer 300 is viewed from the top, because the decoration layer 200 is semi-transmitted and the stain paint is colored to clearly show the color sense and brightness of the real wood, the present invention can provide the distinctive luxurious texture of the real wood.

Moreover, when viewed from the top of the decoration reinforcing layer 300 slantly, since the inside of the engraved part 500 is semi-transmitted, the actual wood image pattern 210 can provide unique and luxurious esthetic sense similar to the real hardwood panel, thereby enhancing quality of products.

In the meantime, when the decoration reinforcing layer 300 is formed on the upper surface of the decoration layer 200 (S30), the flattening layer 400 is formed so that the upper surface of the decoration reinforcing layer 300 is flattened (S40).

In detail, the flattening layer 400 is formed in such a way that a clear paint made of transparent acryl urethane-based resin is coated onto the upper surface of the decoration reinforcing layer 300. The clear paint may be gloss clear paint or matte clear paint.

Here, preferably, the clear paint is coated after coagulation of the stain paint so that the clear paint is not mixed with the stain paint of the decoration reinforcing layer 300.

In this instance, the clear paint may have high flowability through mixing of organic solvent.

Therefore, the flattening layer 400 is coated to flatten the upper surface of the decoration reinforcing layer 300, and enhances a sense of depth since the outer face of the actual wood image pattern 210 is expressed smoothly and three-dimensionally.

Additionally, because the flattening layer 400 is coated to cover the upper surface of the decoration reinforcing layer 300, it minimizes abrasion of the decoration layer 200 and the decoration reinforcing layer 300 and enhances durability.

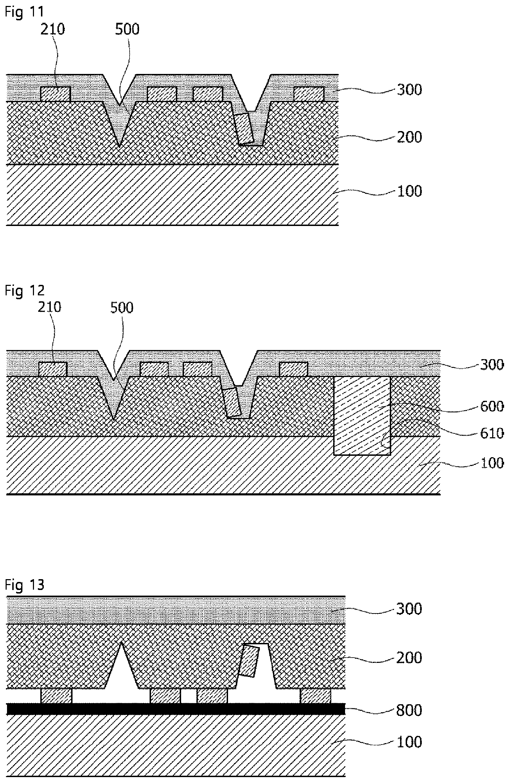

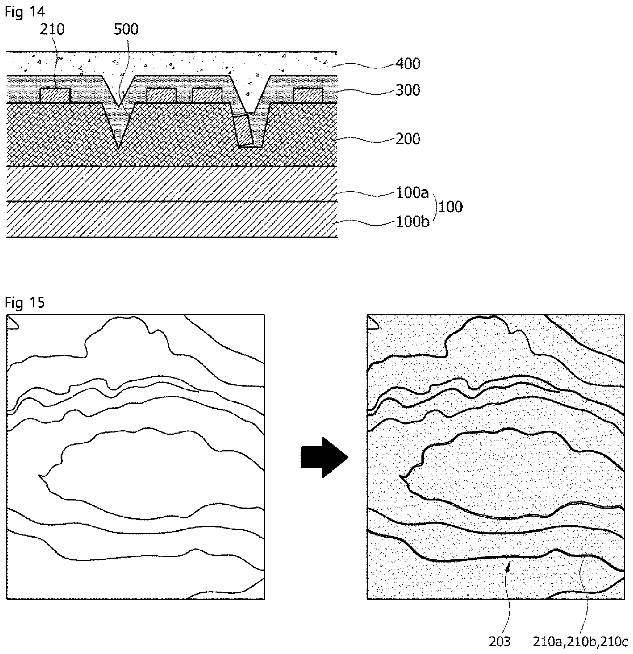

As shown in FIGS. 11 to 16, the engraved part 500 with the predetermined length and depth according to the grain pattern arrangement to provide the actual wood image pattern 210 with the three-dimensional effect is formed integrally with the decoration layer 200.

In addition, the decoration layer 200 may have a carbon pattern, a chrome pattern, a standardized pattern, a stone pattern, and so on, which can express not only the real wood pattern but also sensuous properties, such as texture showing a soft or rough surface, light and shade, volume or three-dimensional effect.

In this instance, the real wood pattern, the carbon pattern, the chrome pattern, the standardized pattern, and the stone pattern are manufactured to have an engraved part or an embossed part by any one among pad printing, water pressure transfer, screen printing, in mold decoration (IMD), colored spray painting, thermal transfer, roll printing, and laser molding.

Moreover, the decoration reinforcing layer 300 formed at one side of the decoration layer 200 is dried while paint and air are sprayed at the same time.

In this instance, air passes through a heating device to spray air of high temperature, and the decoration reinforcing layer is stacked on the decoration layer, and then, the air dries the decoration reinforcing layer 300 while passing through a drying path of high temperature.

In the meantime, the base layer 100 has at least one among an engraved part having predetermined length and depth and an embossed part having predetermined length and height according to the predetermined grain pattern arrangement.

The base layer 100 is applied to a cup holder cover 700. When the base layer is applied to the cup holder cover, the decoration layer and the decoration reinforcing layer are formed to express texture, volume, and light and shade.

That is, the cup holder cover 700 is formed by a structure that the base layer, the decoration layer and the decoration reinforcing layer are stacked integrally.

Alternatively, the decoration layer 200 may be manufactured separately, and then, is stacked and bonded on the upper surface of the base layer 100 by an adhesive 800.

Continuously, an inlaying mounting part 610 is formed on the upper surface of the decoration layer or at one side of the base layer to be dented, an inlaid decoration 600 is stacked, and then, the decoration reinforcing layer is stacked on the inlaid decoration 600.

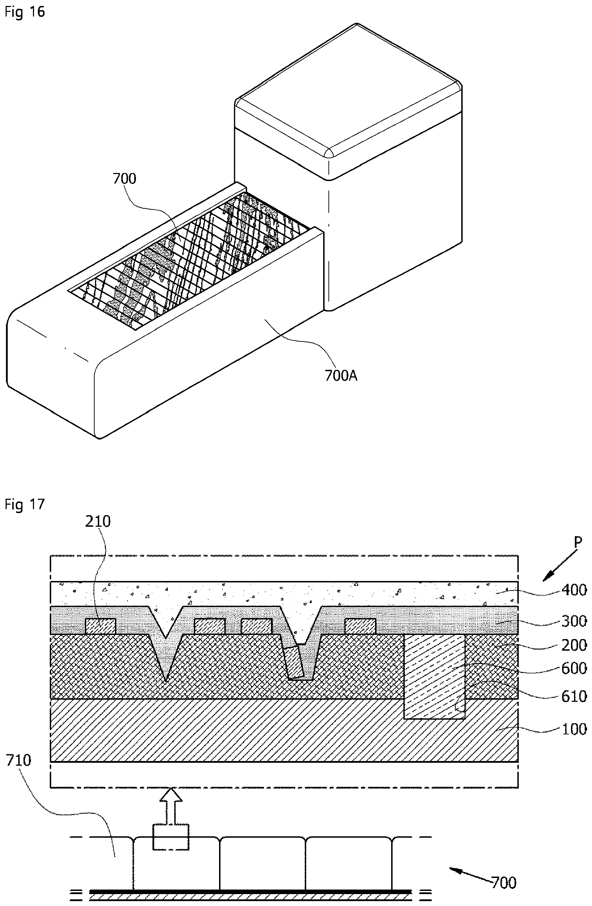

As shown in FIGS. 17 to 21, the decoration panel P according to the present invention is applied to the cup holder cover 700.

Moreover, the cup holder cover 700 is mounted in such a way that upper surfaces of unit blocks 710 of which one side is connected with one side of another unit block or connected integrally with one side of another unit block are formed in a plate shape with a predetermined area and are bendable.

In this instance, the cup holder cover 700 opens and closes an upper portion of a cup holder while moving along a cup holder body 700A, and a part of the cup holder cover, namely, the unit block, can be bent when the cover is opened.

In addition, the unit blocks 710 are disposed on the upper side of the base layer 100 in such a way that the decoration layer 200 is formed integrally.

Furthermore, the decoration reinforcing layer 300 may be further stacked on the upper side of the decoration layer 200 formed on the cup holder cover 700.

Moreover, the decoration layer 200 may be formed at the upper portion of the base layer 100 after an undercoat layer is formed on the upper portion of the base layer 100, or may be directly formed on the upper portion of the base layer 100.

Additionally, the decoration layer may be stacked on the upper portion after forming an undercoat layer and an intermediate coat layer.

In this instance, the decoration layer may have an engraved part formed on the upper portion of the base layer or the undercoat layer by laser cutting or water transfer.

Furthermore, the unit block 710 may further includes a flattening layer 400 for flattening the upper side of the decoration reinforcing layer.

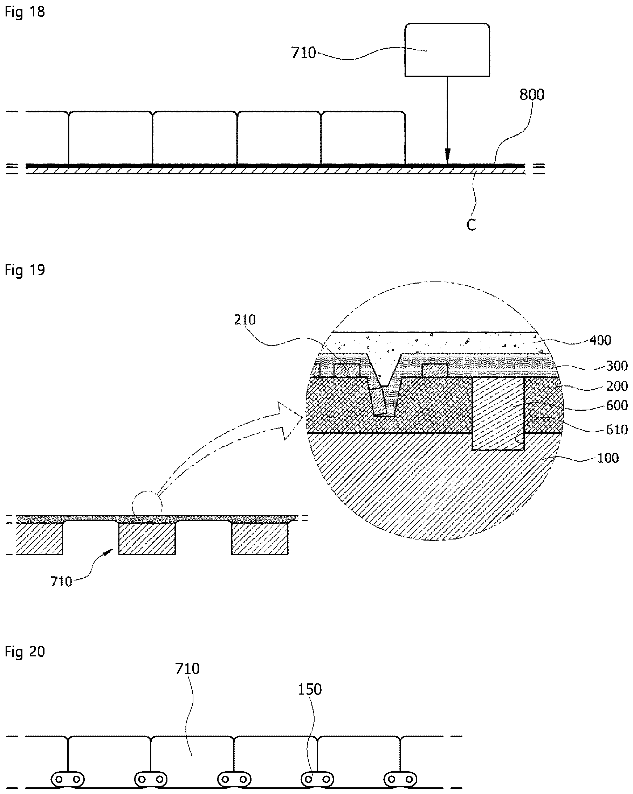

In addition, as shown in FIG. 18, the cup holder covers 700 may be connected with each other through a structure that the unit blocks 710 are bonded to the upper side of a sheet C having an adhesive layer as shown in FIG. 18, a structure that upper sides of the unit blocks 710 made of a hard material are connected integrally by double injection of a soft material as shown in FIG. 19, or a connection means 150 as shown in FIG. 20.

In this instance, the connection means 150 is a hinge connection structure.

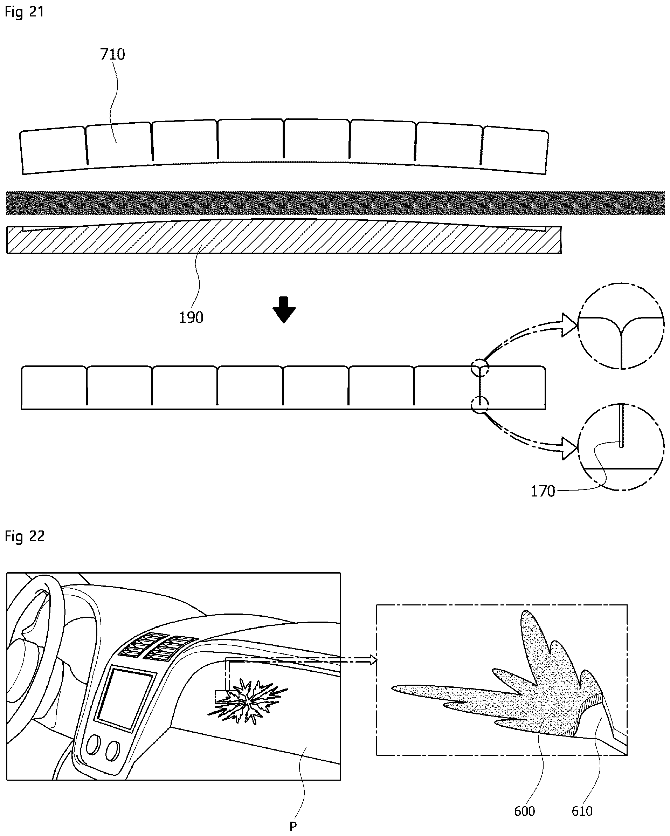

Continuously, as shown in FIG. 21, a plurality of the unit blocks 710 may be molded integrally by a mold 190 in a state where flow holes 170 are interposed at connected portions when being made of the same material.

Moreover, the inlaid decoration 600 having the inlaying mounting part 610 formed to be dented is stacked at a part of the decoration layer or a part of the base layer, and then, the decoration reinforcing layer 300 is stacked on the inlaid decoration 600.

In this instance, the inlaid decoration has a shape that natural or artificial materials, such as mother-of-pearl, natural wood, metal, fabric, carbon sheet, stones and others, are stacked and inserted.

As shown in FIGS. 21 and 22, the decoration panel P according to the present invention has a laminated structure of the base layer 100 of a predetermined shape and the decoration layer 200 integrally stacked on the upper side of the base layer so as to be applied to a dash board, a door trim, and a console trim of a vehicle.

Additionally, the inlaying mounting part 610 is formed at one side of the decoration layer 200 or the base layer 100, and the inlaid decoration 600 is stacked on the inner face of the inlaying mounting part 610.

In the meantime, the inlaid decoration 600 has a shape corresponding to the shape of the inlaying mounting part 610, and has a previously formed basic decoration layer C1 disposed integrally with the upper side of a sheet C, so that the sheet C is stacked and bonded on the inlaying mounting part 610.

### [Best Mode]

An operation of the present invention having the above structure will be described.

First, a base layer 100 made of a resin material with a predetermined color is prepared (S10).

Here, the base layer 100 includes: a resin sheet layer 100a containing one selected from groups containing acryl-based resin, urethane-based resin, and mixture in which acryl-based resin and urethane-based resin are mixed; and an ultraviolet absorbing layer 100b disposed on any one among the upper surface and the lower surface of the resin sheet layer 100a.

Moreover, the decoration layer 200 is printed with lots of translucent ink through which the predetermined color is semi-transmitted to correspond to an actual wood image pattern 210 with one or more colors on the upper surface of the base layer 100 in order to form a decoration layer 200 (S20) .

Here, when the decoration layer 200 is formed on the upper surface of the base layer 100 (S20), laser marking is performed to form an engraved part 500 on the outer surface of the previously formed layer.

In this instance, it is preferable that the previously formed layer be understood as at least one among the base layer 100, the decoration layer 200, the decoration reinforcing layer 300 and the flattening layer 400, which is formed before the step of performing the laser marking, formed by steps. In this embodiment, it is preferable that the previously formed layer be understood actually as the base layer 100 and the decoration layer 200.

Here, the actual wood image pattern 210 is provided with a three-dimensional effect since there is a height difference between the portions adjoining the edges of the engraved grooves 500a, 500b and 500c and the inner faces of the engraved grooves 500a, 500b and 500c due to engraved depths of the engraved grooves.

Furthermore, when the engraved part 500 is formed on the decoration layer 200 and the base layer 100, the decoration reinforcing layer 300 is formed on the upper surface of the decoration layer 200 (S30).

In this instance, the decoration reinforcing layer 300 has a predetermined color to provide the upper surface of the decoration layer 200 with a real wood texture, and is coated with stain paint through which the actual wood image pattern 210 is semi-transmitted.

When the decoration reinforcing layer 300 is viewed from the top, the color shown on the inner face of the engraved part 500 may be shown as mixture of the predetermined color of the base layer 100 and the predetermined color of the decoration reinforcing layer 300.

Additionally, after the decoration reinforcing layer 300 is formed on the upper surface of the decoration layer 200 (S30), the flattening layer 400 is formed so that the upper surface of the decoration reinforcing layer 300 is flattened (S40).

In this instance, the flattening layer 400 is formed in such a way that a clear paint made of transparent acryl urethane-based resin is coated onto the upper surface of the decoration reinforcing layer 300. The clear paint may be one among gloss clear paint and matte clear paint.

Here, the flattening layer 400 may be uniformly coated on the upper surface of the decoration reinforcing layer 300 and is precisely charged in an inner space of the engraved part 500 so as to flatten the upper surface of the decoration reinforcing layer 300.

When the decoration reinforcing layer 300 is viewed from the top, the color expressed to the inner face of the engraved part 500 may be actually the predetermined color since the base layer 100 transmits through the flattening layer 400.

Additionally, a raw material applied to the base layer may be one selected from groups containing acryl-based resin, urethane-based resin, epoxy resin and mixture in which acryl-based resin, urethane-based resin and epoxy resin are mixed.

In this instance, the acryl-based resin is transparent, is high in light penetration rate, has excellent physical properties in hardness, gloss, low temperature vulcanization, adhesiveness, wear resistance, shock resistance, and resistance to laundering, and the urethane-based resin is excellent in elasticity, wear resistance, and machinability.

In addition, various laminated structures, such as a structure that the base layer, the decoration layer through which the engraved part is exposed, and the decoration reinforcing layer are stacked in order, and a structure that the decoration layer is bonded on one side of the base layer so that the engraved part gets in contact with the base layer and the decoration reinforcing layer is stacked at one side of the decoration layer, may be applied.

Continuously, an inlaying mounting part is formed on a portion of the decoration layer or the base layer to be dented, and an inlaid decoration is stacked thereon in order to provide various expressions.

Next, the base layer 100 is applied to a cup holder cover 700 in such a way that an actual wood image is expressed on the cup holder cover, thereby enhancing a value of a product through various expressions.

Moreover, because the decoration layer 200 is stacked and bonded on the upper surface of the base layer 100 by an adhesive 800, it makes stacking or laminating work possible through a simple structure.

Furthermore, the decoration reinforcing layer 300 may be formed when paint is coated on the upper surface of the decoration layer 200.

Additionally, the decoration reinforcing layer may be formed when the stain paint is sprayed by a spray gun or coated onto the upper surface of the decoration layer by a roller.

Therefore, when the decoration reinforcing layer 300 is viewed from the top, because the decoration layer 200 is semi-transmitted and the stain paint is colored to clearly show the color sense and brightness of the real wood, the present invention can provide the distinctive luxurious texture of the real wood.

Moreover, when viewed from the top of the decoration reinforcing layer 300 slantly, since the inside of the engraved part 500 is semi-transmitted, the decoration layer can provide unique and luxurious esthetic sense similar to the real hardwood panel, thereby enhancing quality of products.

A cup holder cover 700 which has unit blocks 710 of which one side is connected with one side of another unit block 710. The upper surfaces of the unit blocks 710 get in contact with each other, so that the cup holder cover is formed in a plate shape with a predetermined area. The cup holder cover 700 covers an upper portion of a cup holder, and can be easily bent when being opened.

In this instance, the unit block 710 is formed by the laminated structure of the base layer 100, the decoration layer 200 and the decoration reinforcing layer 300, so that the cup holder cover 700 shows a real wood sense to enhance a value of products.

Furthermore, the decoration layer 200 has the engrave part formed on the upper portion of an undercoat layer by laser cutting or water transfer so as to express a real wood pattern layer of various shapes.

Additionally, the unit block 710 further has a flattening layer 400 disposed on the upper side of the decoration reinforcing layer to be flattened, thereby preventing accumulation of foreign matters.

In addition, the unit block 710 may be an injection-molded article having an adhesive layer or may be bonded on the upper side of a sheet C having an adhesive layer. Therefore, the unit blocks are manufactured easily.

Moreover, the unit blocks 710 may be manufactured in a single body form, and then, are connected with each other through a connection means 150.

Continuously, the unit block 710 has a flow hole 170 interposed in the connected part, so that the plurality of unit blocks are molded integrally by a mold 190. In this instance, because the unit blocks are manufactured at once by the mold, it reduces production costs.

Furthermore, the unit blocks 710 can show various expressions since an inlaying mounting part 610 is formed at a portion of the decoration layer or the base layer to be dented and an inlaid decoration 600 is stacked on the inlaying mounting part.

Additionally, because the decoration reinforcing layer 300 is dried naturally or dried at high temperature by simultaneous spray of paint and air, it can prevent deterioration in texture due to uneven coating.

In addition, the base layer has an engraved part or an embossed part corresponding to the predetermined grain pattern arrangement in order to express texture without forming additional engraved part when the decoration layer is stacked on the upper surface of the base layer.

In the meantime, the decoration panel P according to the present invention has a lamination structure of the base layer 100 having a predetermined shape to correspond to an applied part of a dash board, a door trim or a console trim and the decoration layer 200 stacked integrally with the upper portion of the base layer, thereby providing the interior of a vehicle with a real wood sense in order to raise the value of the decoration panel.

Moreover, after the inlaying mounting part 610 is formed at one side of the decoration layer 200 or the base layer 100, the inlaid decoration 600 made with mother-of-pearl, natural wood, metal, fabric, carbon sheet, stones and others. Therefore, the present invention can show not only the actual wood image but also various patterns, such as inlaid work, which is a traditional Korean pattern.

Furthermore, the decoration layer 200 has the decoration reinforcing layer 300 formed on the upper portion of the inlaid decoration 600 to enhance durability of the real wood or the inlaid decoration and show a clear expression by coloring.

In the meantime, the flattening layer 400 is disposed on the upper side of the decoration reinforcing layer 300 in order to prevent sensation of foreign bodies and to realize an actual wood image.

Additionally, the inlaid decoration 600 has a shape corresponding to the shape of the inlaying mounting part 610 and has a simple structure that a previously formed basic decoration layer C1 is disposed integrally with the upper side of a sheet C and the sheet C is stacked on the inlaying mounting part 610, thereby simplifying the manufacturing process.

In addition, in the present invention, the base layer of the predetermined shape is first formed, and then, first and second layers engraved or embossed by paint printing or laser cutting are stacked on the upper side of the base layer.

Moreover, the decoration layer 200 is manufactured by one selected from pad printing, water pressure transfer, screen printing, thermal transfer, roll printing, laser engraving, in mold decoration (IMD), and colored spray painting, and has a real wood pattern, a carbon pattern, a chrome pattern, a standardized pattern, and a stone pattern made by the above method.

Furthermore, the decoration reinforcing layer is dried by paint spray and air spray which are performed at the same time, or is dried while passing through a drying path. Therefore, the decoration reinforcing layer is coated uniformly so that an actual wood image layer which looks very realistic can be formed.

While the present invention has been particularly shown and described with reference to exemplary embodiments thereof, it will be understood by those of ordinary skill in the art that the present invention is not limited to the exemplary embodiment and various modifications and equivalents may be made without deviating from the spirit or scope of the invention. Therefore, it would be understood that the modifications and equivalents belong to the scope of the present invention.

### [Industrial Applicability]

The present invention is to raise the value of products by providing the decoration panel applied for automobile parts, such as a dash board, a door trim, a console trim and others, with a three-dimensional effect and texture in order to enhance the quality of the products.

## Claims

1. A method for manufacturing a decoration panel comprising the steps of:
preparing a base layer made of a resin material and having at least one color;
preparing a decoration layer formed by printing of paint having at least one predetermined color so that the color of the base layer is transmitted or semi-transmitted through the upper surface of the base layer; and
forming a decoration reinforcing layer on the upper surface of the decoration layer,
wherein the decoration layer is one among a real wood pattern, a carbon pattern, a chrome pattern, a standardized pattern, and a stone pattern manufactured by one among pad printing, water pressure transfer, screen printing, in mold decoration (IMD), colored spray painting, thermal transfer, roll printing, and laser molding, and
wherein the decoration layer has an engraved part and an embossed part formed integrally, and the engraved part has predetermined length and depth and the embossed part has predetermined length and height according to a predetermined grain pattern arrangement to provide texture, light and shade, and volume.

2. The method for manufacturing a decoration panel according to claim 1, wherein the decoration reinforcing layer is coated with stain paint containing 10 to 30% by weight of yellow paint, 5 to 10% by weight of red paint, 5 to 25% by weight of black paint, and 55 to 60% by weight of transparent paint having urethane resin.

3. The method for manufacturing a decoration panel according to claim 1, wherein the base layer has an engraved part or an embossed part formed integrally in order to correspond to the predetermined grain pattern arrangement.

4. The method for manufacturing a decoration panel according to claim 1, wherein the base layer includes: a resin sheet layer in which a base raw material made with one selected from groups containing acryl-based resin, urethane-based resin, epoxy resin and mixture in which acryl-based resin, urethane-based resin and epoxy resin are mixed, a heat absorbing agent, and additives having a pigment corresponding to the predetermined color are mixed; and an ultraviolet absorbing layer disposed on one among the upper surface and the lower surface of the resin sheet layer.

5. The method for manufacturing a decoration panel according to claim 1, further comprising:
a flattening layer to flatten an upper portion of the decoration reinforcing layer.

6. The method for manufacturing a decoration panel according to claim 1, wherein the decoration reinforcing layer is forcedly dried at the same time with coating of the stain paint.

7. The method for manufacturing a decoration panel according to any one of claims 1 to 6, wherein the base layer on which any one among the decoration layer, the decoration reinforcing layer and the flattening layer is stacked is applied to a cup holder cover, and
wherein the base layer is manufactured in such a way as to be bendable since upper surfaces of unit blocks connected with each other get in contact with each other to form a plate shape with a predetermined area.

8. The method for manufacturing a decoration panel according to claim 7, wherein an inlaying mounting part is formed at a portion of the decoration layer or the base layer to be dented and an inlaid decoration is put on the inlaying mounting part.

9. The method for manufacturing a decoration panel according to claim 8, wherein the inlaid decoration put on the inlaying mounting part has a shape corresponding to the shape of the inlaying mounting part and a basic decoration layer is previously stacked and bonded on the upper surface of a sheet.

10. A method for manufacturing a decoration panel comprising the steps of:
preparing a base layer which is colored or translucent and is made of a resin material;
stacking and forming a decoration layer on one side of the base layer and having paint with at least one predetermined color so that the color of the base layer is transmitted or semi-transmitted; and
stacking a decoration reinforcing layer on the upper surface of the decoration layer,
wherein the decoration layer is one among a real wood pattern, a carbon pattern, a chrome pattern, a standardized pattern, and a stone pattern manufactured by one among pad printing, water pressure transfer, screen printing, in mold decoration (IMD), colored spray painting, thermal transfer, roll printing, and laser molding,
wherein the decoration layer has an engraved part and an embossed part formed integrally, and the engraved part has predetermined length and depth and the embossed part has predetermined length and height according to a predetermined grain pattern arrangement to provide texture, light and shade, and volume, and
wherein the decoration layer is stacked to be located beneath the base layer so that the engraved part and the embossed part get in contact with one side of the base layer.

11. A method for manufacturing a decoration panel comprising the steps of:
preparing a base layer made of a resin material and having at least one color;
preparing a decoration layer formed by printing of paint having at least one predetermined color so that the color of the base layer is transmitted or semi-transmitted through the upper surface of the base layer; and
forming a decoration reinforcing layer on the upper surface of the decoration layer,
wherein the decoration layer is one among a real wood pattern, a carbon pattern, a chrome pattern, a standardized pattern, and a stone pattern manufactured by one among pad printing, water pressure transfer, screen printing, in mold decoration (IMD), colored spray painting, thermal transfer, roll printing, and laser molding,
wherein the decoration layer has an engraved part and an embossed part formed integrally, and the engraved part has predetermined length and depth and the embossed part has predetermined length and height according to a predetermined grain pattern arrangement to provide texture, light and shade, and volume, and
wherein the decoration layer is previously manufactured on a sheet and is stacked and bonded on the upper surface of the base layer by an adhesive.

12. A decoration panel comprising:
a base layer made of a resin material and having at least one color;
a decoration layer stacked on the upper surface of the base layer and having at least one predetermined color so that the color of the base layer is transmitted or semi-transmitted through the upper surface of the base layer; and
a decoration reinforcing layer stacked on the upper surface of the decoration layer,
wherein the base layer, the decoration layer and the decoration reinforcing layer has an integrated lamination structure.

13. The decoration panel according to claim 12, further comprising:
a flattening layer formed to flatten the upper surface of the decoration reinforcing layer,
wherein the base layer includes: a resin sheet layer in which a base raw material made with one selected from groups containing acryl-based resin, urethane-based resin, epoxy resin and mixture in which acryl-based resin, urethane-based resin and epoxy resin are mixed, a heat absorbing agent, and additives having a pigment corresponding to the predetermined color are mixed; and an ultraviolet absorbing layer disposed on one among the upper surface and the lower surface of the resin sheet layer.

14. The decoration panel according to claim 12, wherein the decoration panel is applied to a cup holder cover, and
wherein the cup holder cover is mounted in such a way as to be bendable since upper surfaces of unit blocks connected with each other get in contact with each other to form a plate shape with a predetermined area.

15. The decoration panel according to claim 14, wherein the cup holder cover is selected from structures further including a decoration reinforcing layer and a flattening layer for flattening.

16. The decoration panel according to claim 14, wherein the cup holder cover is selected from a structure that the unit blocks made of a hard material are bonded to the upper side of a sheet made of a soft material by double injection or by an adhesive layer of the sheet.

17. The decoration panel according to claim 14, wherein the cup holder cover is selected from a structure that the unit blocks are connected with each other by a connection means and a structure that a plurality of unit blocks are molded integrally by a mold in which flow holes are interposed between connection parts.

18. The decoration panel according to claim 12 or 14, wherein the decoration panel or the cup holder cover further includes an inlaying mounting part disposed on one side of the decoration layer or the base layer having unit blocks, and an inlaid decoration formed on the inlaying mounting part, and the decoration reinforcing layer is stacked on the inlaid decoration.

19. The decoration panel according to claim 18, further comprising:
a flattening layer stacked on the upper side of the decoration reinforcing layer.
